# EUROPEAN PATENT APPLICATION

(11) **EP 1 469 474 A1**
(43) Date of publication of application: **20.10.2004**
(21) Application number: 04008862.7
(22) Date of filing: 14.04.2004
(51) Int. Cl.: G11B 27/00, G06F 17/30, G11B 17/22

(54) **Recording medium apparatus and recording medium ejection method**

(30) Priority: 14.04.2003 JP 2003109518
(71) Applicant: Pioneer Corporation, Meguro-ku, Tokyo (JP)
(72) Inventor: Watanabe, Hideo Pioneer Corporation, Yamada Kawagoe-shi Saitama (JP); Endo, Fumio Pioneer Corporation, Yamada Kawagoe-shi Saitama (JP); Watanabe, Koji Pioneer Corporation, Yamada Kawagoe-shi Saitama (JP); Morimoto, Mitsutoshi Pioneer Corporation, Yamada Kawagoe-shi Saitama (JP)
(74) Representative: Reinhard - Skuhra - Weise & Partner GbR

(57) **Abstract**

A recording medium apparatus has a storage section for storing a plurality of recording media, an ejection slot for ejecting the recording media stored in the storage section to the outside of the apparatus, a designation section (an user operation section and a OSD) to designate recording media which is to be ejected through the ejection slot out of the plurality of recording media stored in the storage section, and a control section (a system controller) for consecutively executing ejection of the recording media designated through the designation section in sequence.

## Description

### Background of the Invention

### Field of the Invention

The invention relates to a recording medium apparatus which enables to store a plurality of recording media and a recording medium ejection method.

### Description of the Related Art

A representative apparatus for storing a plurality of recording media is, for example, a recording medium apparatus for storing a plurality of CDs (compact disks) in the apparatus and selecting any desired CD from among the stored CDs to play back the selected CD. (For example, refer to JP-A-2001-176176.)

JP-A-2001-176176 is known as a related art.

In order to eject a recording medium stored in such a recording medium apparatus to the outside of the apparatus, the user designates the storage location of the recording medium to be ejected and operates an eject key.

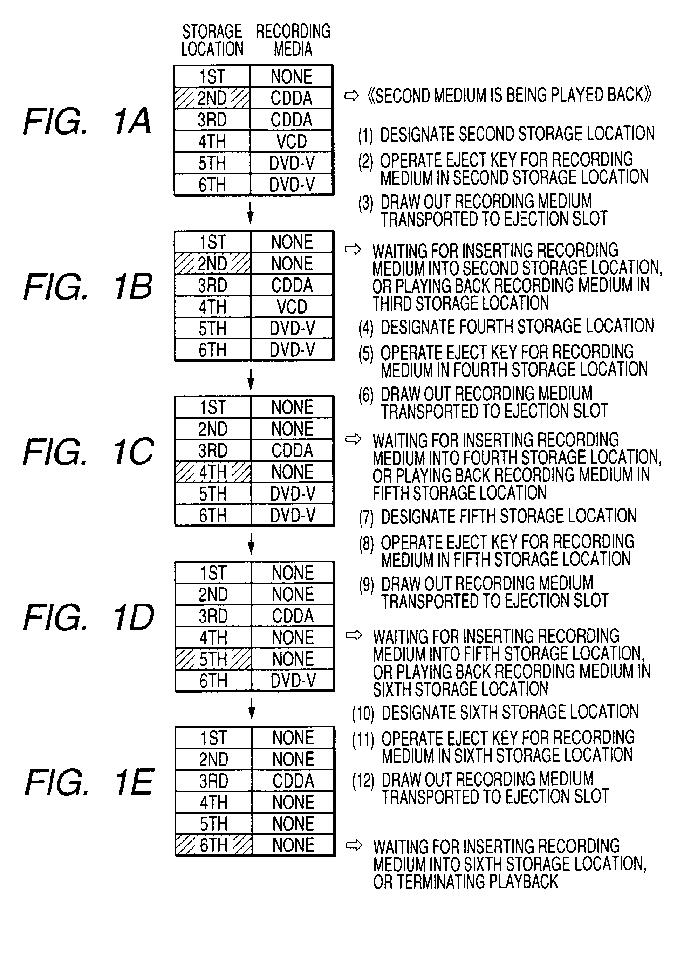

FIGs. 1A to 1E schematically represent the case where only the recording medium stored in the third storage location, of five recording media stored in the apparatus is left in the apparatus and other recording media (recording media stored in the second, fourth, fifth, and sixth storage locations) are ejected to the outside of the apparatus.

FIG. 1A shows a state in which the recording media are stored in the second to sixth storage locations, no recording medium is stored in the first storage location, and the recording medium stored in the second storage location is drawn out to the playback position and is played back. It shows that a CDDA (compact disk digital audio) is stored in the second storage location, that a CDDA is stored in the third storage location, that a VCD (video CD) is stored in the fourth storage location, that a DVD-V (DVD-video) is stored in the fifth storage location, and that a DVD-V is stored in the sixth storage location.

The user designates the second storage location and subsequently operates the eject key to eject the CDDA stored in the second storage location to the outside of the apparatus as shown in FIG. 1B from the storage state shown in FIG. 1A. Then, playing back the CDDA at the playback position is stopped and the CDDA is transported to the position where a part of the recording medium is projected to the outside of the apparatus from an ejection slot designed for ejecting recording media one at a time. The user grasps the part projected from the ejection slot and draws out the recording medium, whereby the ejection operation of the CDDA stored in the second storage location is complete. Subsequently, the user performs operation for the recording media stored in the fourth to sixth storage locations in sequence as the user performs operation to eject the CDDA stored in the second storage location, whereby the ejection operation sequence of the recording media with only the CDDA stored in the third storage location left in the apparatus is complete.

Thus, if the user wants to take out a plurality of unnecessary recording media stored in the apparatus out of the apparatus, the user needs to perform designation operation of the recording medium storage location, operation of the eject key, and operation of drawing out the recording medium repeatedly for each recording medium to be taken out. Thus, ejecting a plurality of unnecessary recording media to the outside of the apparatus requires much expense in time and effort so that it is inconvenient.

### Summary of the Invention

An object of the invention is to provide a recording medium apparatus and a recording medium ejection method which enable a user to perform simple operation for ejecting a plurality of unnecessary recording media stored in the apparatus.

The invention provides a recording medium apparatus having a storage section, which is provided in the recording medium apparatus, for storing a plurality of recording media; an ejection slot for ejecting the recording media stored in the storage section to outside of the recording medium apparatus; a designation section to designate recording media which is to be ejected through the ejection slot out of the plurality of recording media stored in the storage section; and a control section for consecutively executing ejection of said recording media designated through the designation section in sequence.

The invention also provides a recording medium ejection method of ejecting designated recording media from a storage section which stores a plurality of recording media, having the steps of designating recording media to be ejected out of the plurality of recording media stored in the storage section; and consecutively executing ejection of the designated recording media in sequence.

### Brief Description of the Drawings

FIGs. 1A to 1E are drawings to show steps of a recording medium ejection method for ejecting a plurality of recording media in a recording medium apparatus in a related art;
FIG. 2 is a block diagram to show the configuration of a recording medium apparatus of an embodiment according to the invention;
FIG. 3 is a flowchart to show a generation procedure of a recording medium information table;
FIG. 4 is a flowchart to show an example of the embodiment according to the invention (wherein recording media designated by the user are ejected consecutively);
FIG. 5 is a flowchart to show batch ejection process;
FIGs. 6A to 6E are drawings to show steps of a specific example of consecutively ejecting a plurality of recording media designated by the user;
FIG. 7 is a flowchart to show another example of the embodiment according to the invention (wherein recording media of a specific type are ejected consecutively);
FIGs. 8A to 8D are drawings to show steps of a specific example of consecutively ejecting recording media of a specific type selected by the user;
FIG. 9A shows a screen for designating DVD-V as recording media to be ejected in the specific example in FIGs. 8A to 8D;
FIG. 9B shows a screen for starting recording medium ejection; and
FIG. 10A shows a screen for designating DVD-V and VCD as recording media to be ejected in the specific example in FIGs. 8A to 8D; and
FIG. 10B shows a screen for starting recording medium ejection.

### Detailed Description of the Preferred Embodiments

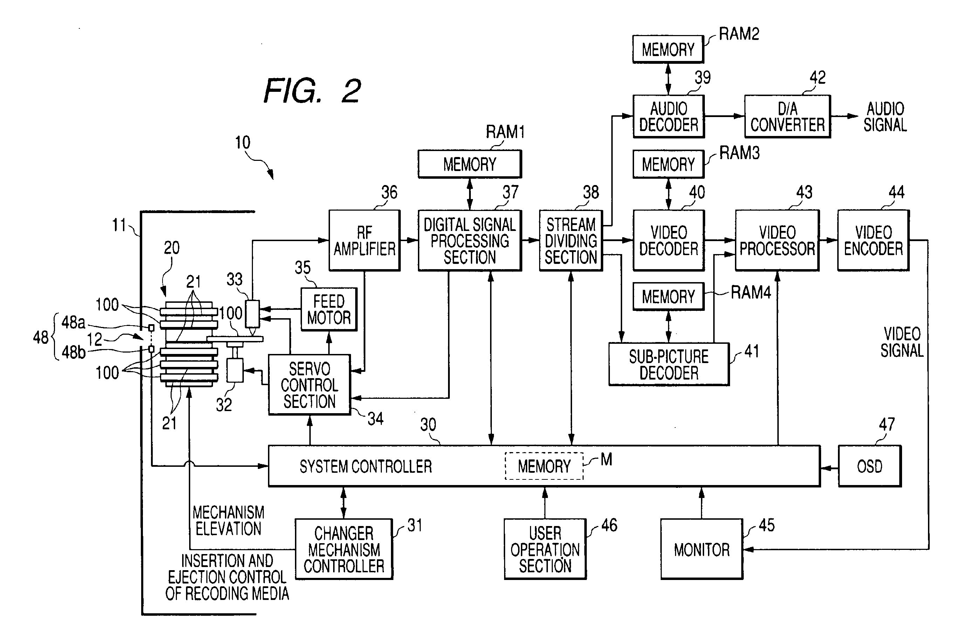

An Embodiment of the invention will be described with reference to FIGs. 2 to 10. FIG. 2 is a functional block diagram to show a recording medium apparatus 10 according to the embodiment of the invention.

The recording medium apparatus 10 shown in FIG. 2 includes a storage section 20 which is capable of storing a plurality of recording media 100 to be stacked in a case 11, and an ejection slot 12 which enables one recording medium 100 to pass through in front of the case 11 (the storage section 20 is configured from trays 21 formed to be multiple layers. Various recording medium 100 can be stored in each tray 21).
The ejection slot 12 may also have a function as an insertion slot for inserting the recording medium 100 into the recording medium apparatus 10.

The storage section 20 can be moved along the arrangement (stack) direction of the recording media 100 under the control of a changer mechanism controller 31.

In the case of inserting a recording medium through the ejection slot 12, a tray where no recording medium is stored in the storage section 20 is positioned at the position opposed to the ejection slot 12. In the case of ejecting a recording medium stored in the storage section 20 to the outside of the apparatus, a tray where the recording medium 100 to be ejected is stored is positioned at the position opposed to the ejection slot 12.

The inserted recording medium is transported to the storage section 20 by a recording medium transport mechanism (not shown), and the recording medium stored in the storage section 20 is transported to the ejection slot 12.

Thus, the changer mechanism controller 31 controls to move the storage section 20. Therefore, the recording media 100 inserted through the ejection slot 12 which allows one recording medium 100 to pass through at a time can be stored in the trays 21 in the storage section 20 in sequence. Further, unnecessary recording media 100 stored in the storage section 20 can be ejected through the ejection slot 12 to the outside of the apparatus in sequence. The changer mechanism controller 31 executes operational control of the storage section 20 and the recording medium transport mechanism in response to a command from a system controller 30 as a control section.

To play back the recording medium 100 stored in the storage section 20, the storage section 20 is moved in the arrangement (stack) direction of the recording media 100. A tray where the recording medium to be played back is stored is positioned at the playback position. The recording medium positioned at the playback position is placed on a turntable and is turned at a predetermined rotation speed by drive of a spindle motor 32.

The data recorded on the recording medium turned by the spindle motor 32 is read as laser light is emitted from an optical pickup 33 (configured from a semiconductor laser, an object lens, a photodetector, etc., which are not shown, for example) disposed above the spindle motor 32. The read data is subjected to photoelectric conversion and is supplied to an RF amplifier 36. The optical pickup 33 is moved in the radial direction of the recording medium 100 by a feed motor 35 and reads the data recorded on the recording medium 100 in sequence.

The spindle motor 32, the optical pickup 33, and the feed motor 35 are controlled by a servo control section 34. This servo control section 34 executes rotation servo control of the spindle motor 32, focus servo control of the optical pickup 33, servo control of the feed speed of the feed motor 35, and the like according to an error signal (for example, a focus error, a tracking error, etc.,) supplied from the RF amplifier 36.

On the other hand, the RF amplifier 36 amplifies the data subjected to photoelectric conversion to generate a playback signal. The playback signal output from the RF amplifier 36 is supplied to a digital signal processing section 37, which then performs digital signal processing of error correction, etc., for the playback signal, and supplies the signal to a stream dividing section 38. The digital signal processing section 37 also transfers/receives a control signal to and from the system controller 30 bidirectionally. Memory RAM1 for temporarily storing the playback signal subjected to digital signal processing is connected to the digital signal processing section 37. An interleave process, etc., is performed for the play back signal stored in the memory RAM1. An error signal, etc., is also supplied from the digital signal processing section 37 to the servo control section 34 which executes servo control in response to the error signal, etc.

The stream dividing section 38 divides the supplied playback signal into an audio stream, a video stream of a moving image, and a video stream of a still image. The audio stream is supplied to an audio decoder 39, the video stream of a moving image is supplied to a video decoder 40, and the video stream of a still image is supplied to a sub-picture decoder 41.

In the case that the audio stream is compressed and coded by MP3, MPEG1Audio, etc., for example, (CD-R and VCD can be named as recording media recording the data compressed and coded in MP3, MPEG1Audio, etc.), the audio stream is temporarily stored in memory RAM2 and is decompressed and decoded by the audio decoder 39 and is transmitted to a D/A converter 42. The decoded voice stream is converted into an analog audio signal by the D/A converter 42 and the analog audio signal is output from speakers, etc.

The video stream of a moving image is compressed and coded by MPEG1, MPEG2, etc., for example, (VCD and DVD can be named as recording media recording the data compressed and coded in MPEG1, MPEG2, etc.). It is temporarily stored in memory RAM3 and is decompressed and decoded by the video decoder 40 and is transmitted to a video processor 43. Likewise, the video stream of a still image is compressed and coded by JPEG, etc., for example, (CD-R can be named as recording media recording the data compressed and coded in JPEG, etc.,). It is temporarily stored in memory RAM4 and is decompressed and decoded by the sub-picture decoder 41 and is transmitted to the video processor 43.

Further, the decompressed and decoded video stream is subjected to image processing for noise removal, etc., in the video processor 43 and is supplied to a video encoder 44. This video encoder 44 converts the signal supplied from the video processor 43 (for example, analog RGB signal) into a video signal that can be displayed on a monitor 45 (for example, NTSC video signal, etc.,). The video signal converted by the video encoder 44 is supplied to the monitor 45 and displayed on the monitor 45.

A user operation section 46 as selection means is connected to the system controller 30. The user can operate the user operation section 46 to previously select the trays of recording media and the type of recording medium for batch ejection.

An OSD (on screen display) 47 functioning as a GUI (graphical user interface) is connected to the system controller 30, so that various information can be displayed on a screen. Further, the OSD 47 may be a touch panel, in which case it can serve as a part of the function of the user operation section 46.

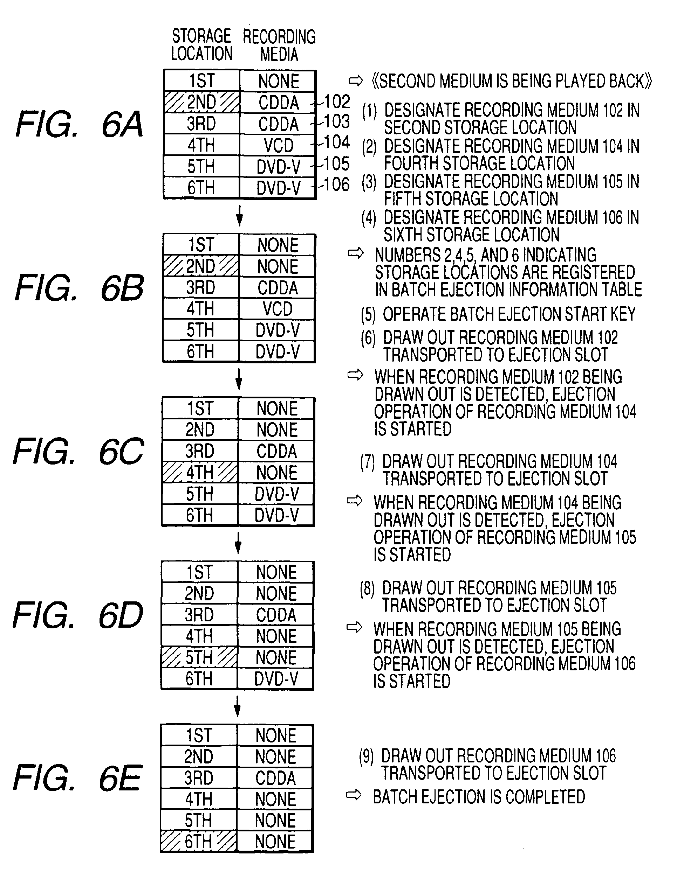

A memory M in the system controller 30 stores information which shows storage states of the recording media 100 in the storage section 20. When the power of the recording medium apparatus 1 is turned on or when a new recording medium is inserted after the power is turned on, management information of the recording media stored in the storage section 20 is read in sequence by the optical pickup 33 and the read information is supplied to the system controller 30 for storage in the memory M. A recording medium information table which corresponds at least between information indicating the type of recording medium (for example, CDDA, VCD, DVD-V, etc.,) and the numbers indicating the storage locations in the storage section 20 (for example, see FIG. 6A) is generated in the memory M.

A contact or noncontact sensor (for example, a photosensor), etc., with the recording media 100 can be used as a detection section 48.
As shown in FIG. 2, the detection section 48 is provided in the proximity of the ejection slot 12 in the case 11. When a part of the transported recording medium 100 is exposed to the outside of the recording medium apparatus 10 from the ejection slot 12, the recording medium 100 blocks light between a light reception part 48a of the photosensor and a light emission part 48b. Thus, when the user draws out the recording medium 100, the light reception part 48a again receives once blocked light, so that drawing-out completion information is supplied to the system controller 30.

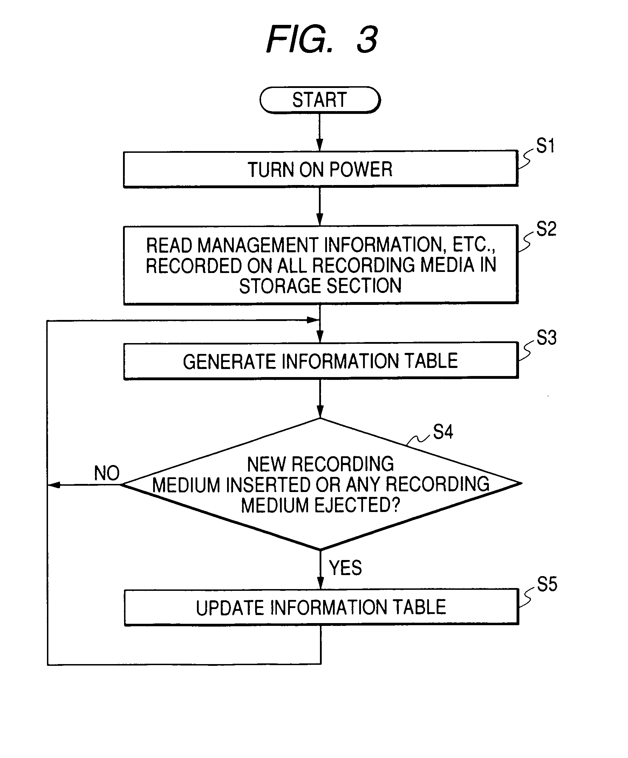

A procedure for generating the recording medium information table described above will be discussed with FIG. 3.
As shown in FIG. 3, when the power of the recording medium apparatus 1 is turned on (step S1), the recording media 100 in all storage locations in the storage section 20 are transported to the playback position in order, and management information, etc., recorded on each recording medium 100 is read by the optical pickup 33 (step S2). The presence or absence of a recording medium and the type of recording medium (CDDA, VCD, DVD-V, etc.,) in each storage location are determined. The presence or absence of a recording medium is determined as no recording medium being positioned at the playback position is detected after the expiration of a predetermined time, for example. The recording medium information table listing the correspondence between the type of recording medium and the numbers indicating the storage locations in the storage section 20 is generated based on the information (step S3).

Whether or not a new recording medium is inserted or any of the recording media in the storage section 20 is ejected is determined (step S4). If a new recording medium is inserted or any of the recording media in the storage section 20 is ejected (YES), the contents of the recording medium information table are updated in response to recording medium insertion or ejection (step S5).

The recording medium information table is generated in the memory M as described above.
The memory M may be implemented as nonvolatile memory, etc., or additional nonvolatile memory, etc., may be provided for transferring data to the memory M when the power is turned on. Alternatively, a backup battery, etc., may be used to enable the data to be retained while the power is off.

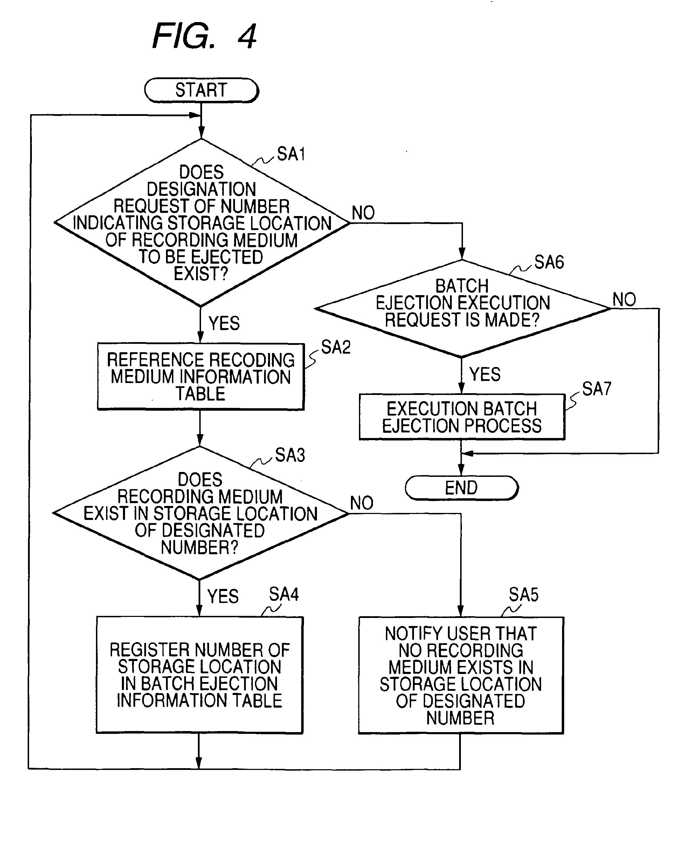

Next, a recording medium ejection method according to the embodiment will be discussed.
First, an example of ejecting in batch the recording media previously selected by a user will be discussed with FIGs. 4 to 6.

As shown in a flowchart of FIG. 4, the system controller 30 determines whether or not a designation request of the number indicating the storage location (tray) of the recording medium to be ejected exists is determined (step SA1). If a designation request of the number indicating the storage location is made (Yes), the system controller 30 refers to the recording medium information table (step SA2).
The system controller 30 determines whether or not a recording medium exists in the storage location (tray) corresponding to the designated number with reference to the recording medium information table (step SA3).

If it is determined at step SA3 that a recording medium exists in the storage location of the designated number (Yes), the system controller 30 registers the number of the storage location in a batch ejection information table (step SA4). This batch ejection information table is a table for registering the numbers indicating the storage locations of the recording media to be ejected when a plurality of recording media stored in the storage section 20 are to be consecutively ejected in sequence. The number is registered to the batch ejection information table based on the above-mentioned designation request.
On the other hand, if no recording medium exists in the storage location of the designated number (No), a notification meaning "no recording medium exists in the storage location of the designated number" is output (step SA5), for example.

If a designation request of the number indicating the storage location of the recording medium to be ejected is not made (No) at step SA1, the system controller 30 determines whether or not a batch ejection execution request, namely, a request for executing the operation of ejecting a plurality of recording media consecutively in sequence is made (step SA6).
If the batch ejection execution request is made (Yes) at step SA6, batch ejection process described later, namely, process of ejecting a plurality of recording media consecutively in sequence is executed (step SA7) to be terminated. If a batch ejection execution request is not made (No), the batch ejection process is not executed to be terminated.

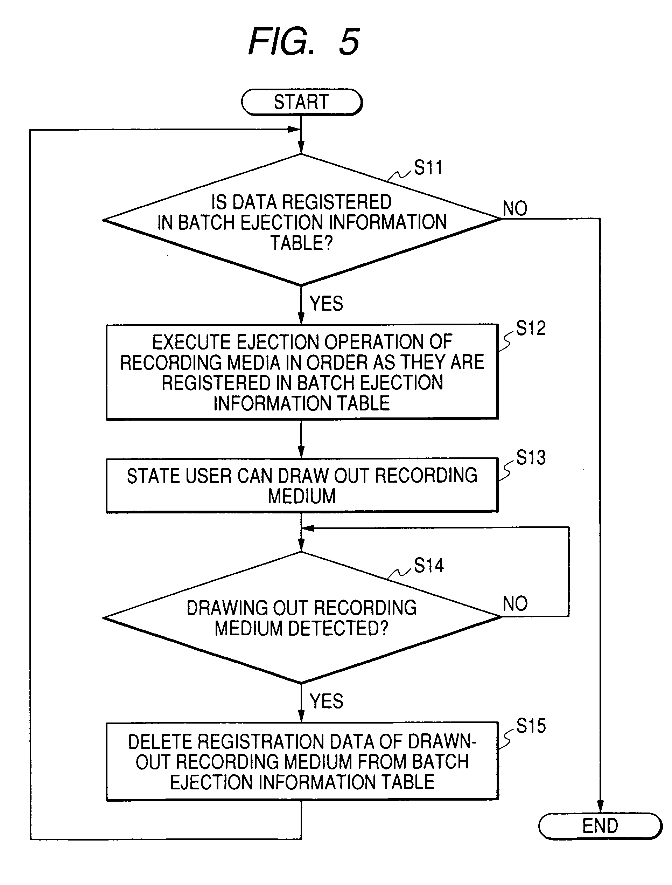

Next, the batch ejection process will be discussed below in detail with FIG. 5.
FIG. 5 is a flowchart to show the batch ejection process.
The system controller 30 determines whether or not data is registered in the batch ejection information table (step S11). If no data is registered in the batch ejection information table (No), the process is terminated.

On the other hand, if data is registered in the batch ejection information table (Yes), the ejection operation of the recording media is executed in the order in which the numbers indicating the storage locations of the recording media are registered in the batch ejection information table (step S12). Accordingly, the first recording medium is transported to the position where a part of the recording medium is projected to the outside of the apparatus from the ejection slot 12. The detection section 48 detects the recording medium existing at the position of the ejection slot 12 and becomes a state where the user can draw out the recording medium (step S13).

Further, the detection section 48 detects whether or not the user draws out the recording medium from the ejection slot 12 (step S14).
If the detection section 48 detects the recording medium being drawn out (Yes), the system controller 30 deletes the registration data of the drawn-out recording medium from the batch ejection information table (step S15).

The process returns to step S11 and the ejection operation for the next recording medium registered in the batch ejection information table is executed.
The ejection operation is thus repeated until the data registered in the batch ejection information table has been all deleted (until determination of "No" is made at step S11).

Next, the batch ejection will be explained in detail by showing a specific example in FIGs. 6A to 6E.
FIGs. 6A to 6E are drawings to describe an example of ejecting in batch four recording media designated by the user from the recording medium apparatus 10 having the storage section 20 capable of storing six recording media.
Tables in FIGs. 6A to 6E indicate the recording medium information table listing the correspondence between information indicating the presence or absence of recording medium, the type of recording medium (CDDA, VCD, DVD-V, etc.,), and the numbers indicating the storage locations (1 to 6).
Referring to the recording medium information table in FIG. 6A, it is seen that no recording medium is stored in the first storage location, that a CDDA (recording medium 102) is stored in the second storage location, that a CDDA (recording medium 103) is stored in the third storage location, that a VCD (recording medium 104) is stored in the fourth storage location, that a DVD-V (recording medium 105) is stored in the fifth storage location, and that a DVD-V (recording medium 106) is stored in the sixth storage location.

The user operates a designation key, etc., (not shown) provided on the user operation section 46 in sequence to register the numbers of the storage locations in the batch ejection information table as in (1) to (4): (At this point in time, the CDDA (recording medium 102) in the second storage location is played back.)
(1) Designate the recording medium 102 in the second storage location;
(2) designate the recording medium 104 in the fourth storage location;
(3) designate the recording medium 105 in the fifth storage location; and
(4) designate the recording medium 106 in the sixth
storage location.
Now, the numbers 2, 4, 5, and 6 indicating the storage locations are registered in the batch ejection information table.
Next, for example, the user presses an ejection start key for executing batch ejection process (5).

Batch ejection is started. First, the system controller 30 controls the servo control section 34 for stopping playback of the recording medium 102 and returning the recording medium 102 at the playback position to the second storage location. The system controller 30 controls the changer mechanism controller 31 for transporting the recording medium 102 to the position where a part of the recording medium is projected to the outside of the apparatus from the ejection slot 12 (FIG. 6B). The user draws out the recording medium 102 (6).
Next, as the detection section 48 detects the recording medium 102 being drawn out, the ejection operation of the recording medium 104 in the fourth storage location registered in the batch ejection information table is started. The recording medium information table is updated at this time and data indicating "NONE" in the second storage location is written as shown in FIG. 6B. In the batch ejection information table, 2 is deleted.

Next, the recording medium 104 in the fourth storage location is transported to the position where a part of the recording medium is projected to the outside of the apparatus from the ejection slot 12 (FIG. 6C). The user draws out the recording medium 104 (7).
As the detection section 48 detects the recording medium 104 being drawn out, the system controller 30 controls the changer mechanism controller 31 for starting the ejection operation of the recording medium 105 in the fifth storage location registered in the batch ejection information table.

Next, the recording medium 105 in the fifth storage location is transported to the position where a part of the recording medium is projected to the outside of the apparatus from the ejection slot 12 (FIG. 6D). The user draws out the recording medium 105 (8).
As the detection section 48 detects the recording medium 105 being drawn out, the system controller 30 controls the changer mechanism controller 31 for starting the ejection operation of the recording medium 106 in the sixth storage location registered in the batch ejection information table.

Last, the recording medium 106 in the sixth storage location is transported to the position where a part of the recording medium is projected to the outside of the apparatus from the ejection slot 12 (FIG. 6E). The user draws out the recording medium 106 (9). The storage position data registered in the batch ejection information table runs out and the batch ejection operation is completed. The recording medium information table is updated at this time and data indicating "NONE" in the sixth storage location is written as shown in FIG. 6E. Thus, the system controller 30 controls the changer mechanism controller 31 for consecutively executing the ejection operation of a plurality of recording media until the data registered in the batch ejection information table runs out.

In the recording medium ejection method as in the related art, the user designates the storage position of a predetermined storage medium and subsequently operates the eject key and then draws out the recording medium transported to the position of the ejection slot, whereby the ejection operation of one recording medium is complete. In this method, to eject a plurality of storage media, the user needs to operate the eject key for each storage medium (see FIGs. 1A to 1E). In the embodiment, however, if the user previously registers the recording media to be ejected in batch, as the user operates the ejection start key, the ejection operation of a plurality of storage media is consecutively executed in sequence, so that the labor of the user can be saved and the ejection time can be shortened.

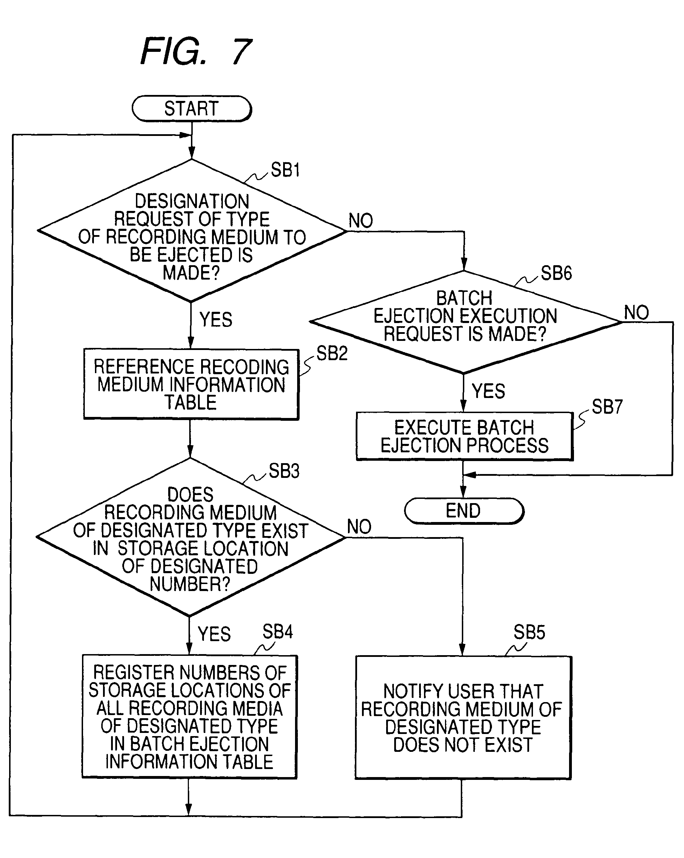

Next, another example of the recording medium ejection method according to the embodiment will be discussed with a flowchart of FIG. 7.
FIG. 7 is a flowchart to show the ejection operation of recording media of the designated type. The flowchart to indicate the batch ejection process (see FIG. 5) is common.

As shown in the flowchart of FIG. 7, the system controller 30 determines whether or not the type of recording medium to be ejected is designated at step SB1. If the type of recording medium to be ejected is designated (Yes), the system controller 30 refers to the recording medium information table (step SB2).
The system controller 30 refers to the recording medium information table in order to determine whether or not a recording medium of the designated type exists in the recording medium information table (step SB3).
If a recording medium of the designated type exists (Yes), the system controller 30 registers the numbers of the storage locations of all recording media of the designated type in the batch ejection information table (step SB4).
On the other hand, if a recording medium of the designated type does not exist (No), a notification to the effect that "a recording medium of the designated type does not exist" is output (step SB5).
If the type of recording medium to be ejected is not designated (No) at step SB1, the system controller 30 determines whether or not a batch ejection execution request is made (step SB6).
If a batch ejection execution request is made (Yes) at step SB6, the batch ejection process previously described with reference to FIG. 5 is executed (step SB7) and the process is terminated. If a batch ejection execution request is not made (No), batch ejection process is not executed and the process is terminated.

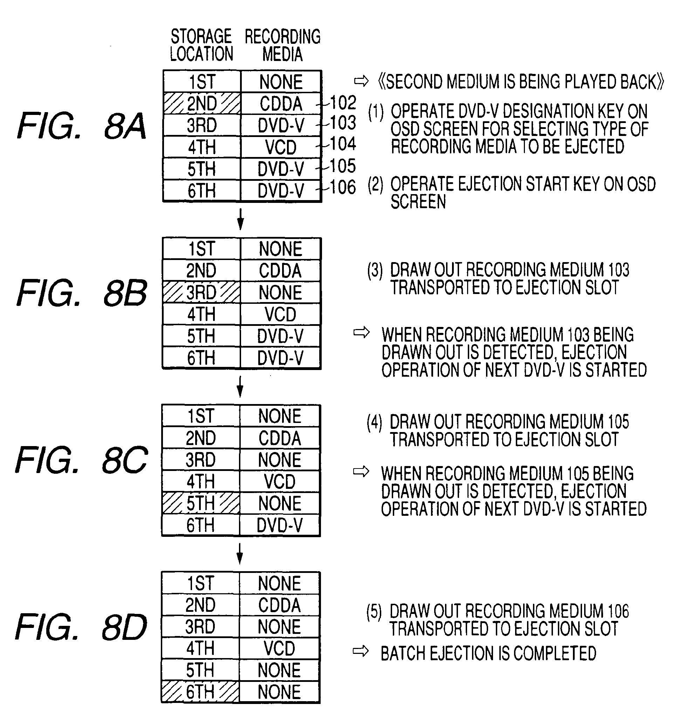

Next, the recording medium ejection method will be discussed in more detail by showing a specific example in FIGs. 8A to 10B.
FIGs. 8A to 8D are drawings to describe an example of ejecting in batch recording media of a predetermined type selected by the user from the recording medium apparatus 10 capable of storing six recording media.

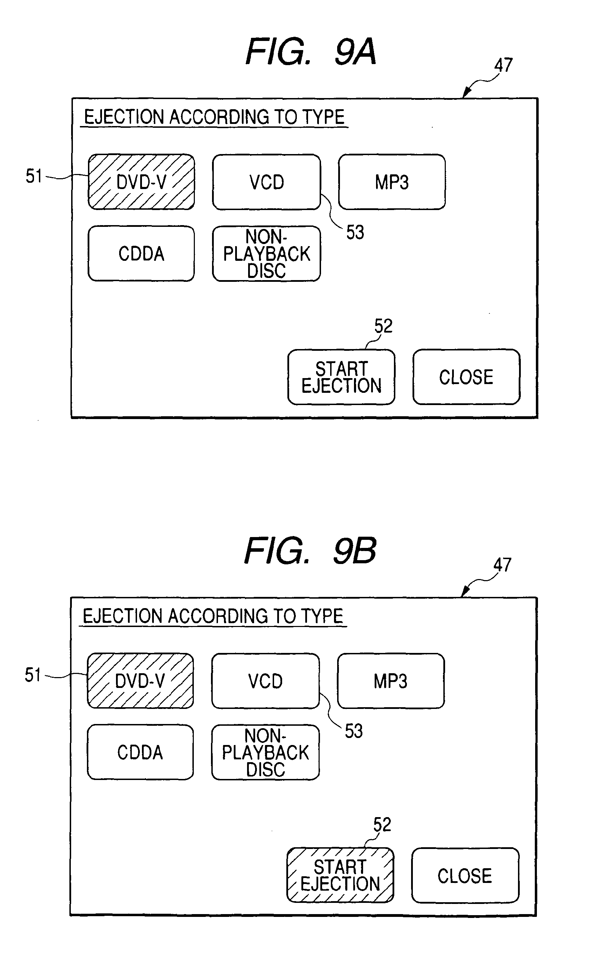

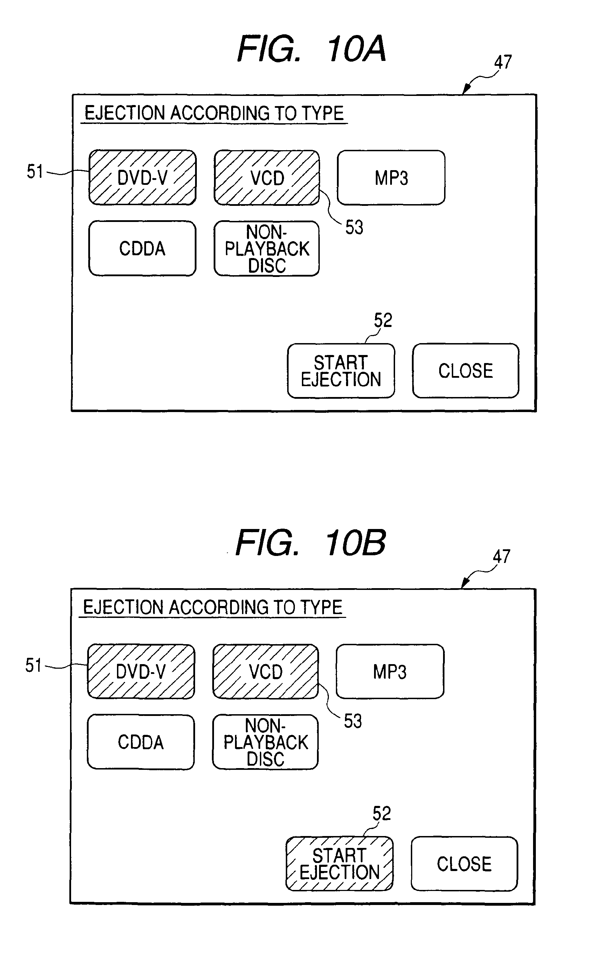

FIGs. 9A and 9B show screen display of the OSD 47 for designating only DVD-V as the type of recording media and ejecting the recording media of the designated type. FIGs. 10A and 10B show screen display of the OSD 47 for designating video recording media (for example, VCD and DVD-V) and ejecting the video recording media.

Tables in FIGs. 8A to 8D are the recording medium information table listing the correspondence between information indicating the presence or absence of recording medium and the type of recording medium (CDDA, VCD, DVD-V, etc.,) and the numbers indicating the storage locations of recording media (1 to 6).
Referring to the recording medium information table in FIG. 8A, it is seen that no recording medium is stored in the first storage location, that a CDDA (recording medium 102) is stored in the second storage location, that a DVD-V (recording medium 103) is stored in the third storage location, that a VCD (recording medium 104) is stored in the fourth storage location, that a DVD-V (recording medium 105) is stored in the fifth storage location, and that a DVD-V (recording medium 106) is stored in the sixth storage location.
(1) The user operates a DVD-V key 51 hatched in FIG. 9A, of keys displayed on the OSD 47 to designate DVD-V as the type of recording media to be ejected.
   Upon reception of the command in (1), the numbers of the storage locations (3, 5, and 6) are registered in the batch ejection information table in the memory M.
   At this point in time, the CDDA (recording medium 102) in the second storage location is played back.
(2) The user operates an ejection start key 52 hatched in FIG. 9B, of the keys displayed on the OSD 47.

Upon reception of the command in (2), the batch ejection operation is started. First, the system controller 30 controls the servo control section 34 for interrupting playback of the recording medium 102.
The system controller 30 controls the changer mechanism controller 31 for transporting the first recording medium whose type is DVD-V (recording medium 103 in the third storage location) to the position where a part of the recording medium is projected to the outside of the apparatus from the ejection slot 12 (FIG. 8B). The user draws out the recording medium 103 (3).
Next, as the detection section 48 detects the recording medium 103 being drawn out, the system controller 30 controls the changer mechanism controller 31 for starting the ejection operation of the next DVD-V (recording medium 105 in the fifth storage location) registered in the batch ejection information table. The recording medium information table is updated at this time and data indicating "NONE" in the third storage location is written as shown in FIG. 8B.

Next, the recording medium 105 (DVD-V) in the fifth storage location is transported to the position where a part of the recording medium is projected to the outside of the apparatus from the ejection slot 12 (FIG. 8C). The user draws out the recording medium 105 (4).
As the detection section 48 detects the recording medium 105 being drawn out, the system controller 30 controls the changer mechanism controller 31 for starting the ejection operation of the recording medium 106 (DVD-V) in the sixth storage location registered in the batch ejection information table. The recording medium information table is updated at this time and data indicating "NONE" in the fifth storage location is written as shown in FIG. 8C.

Last, the recording medium 106 (DVD-V) in the sixth storage location is transported to the position where a part of the recording medium is projected to the outside of the apparatus from the ejection slot 12 (FIG. 8D). The user grasps the part projected from the ejection slot 12 and draws out the recording medium 106 (5).
The detection section 48 detects the recording medium 106 being drawn out, the storage position data registered in the batch ejection information table runs out, and the batch ejection operation is completed. The recording medium information table is updated at this time and data indicating "NONE" in the sixth storage location is written as shown in FIG. 6D. Thus, the system controller 30 controls the changer mechanism controller 31 for consecutively executing the ejection operation of a plurality of recording media until the data registered in the batch ejection information table runs out.

In the embodiment, different types of recording media can also be designated together for ejection; two types of recording media (VCD and DVD-V) can be designated for ejection, for example, as shown in FIGs. 10A and 10B.
In this case, first the user operates the DVD-V key 51 and a VCD key 53 as hatched in FIG. 10A to designate the types of recording media to be ejected and then operates the ejection start key 52, for example, as hatched in FIG. 10B to execute ejection of the recording media.

As explained above, the user thus designates the type of recording media, so that only the recording media of the designated type can be ejected in batch.

In the related art, to eject recording media of a specific type, the user repeats the operation of checking the storage position of each recording medium to be ejected, operating the eject key, and drawing out the ejected recording medium for each recording medium to be ejected. In contrast, in order to eject recording media of a specific type, the recording medium apparatus of the embodiment enables the user to operate only the key to designate recording medium type and the key to start the batch ejection which are displayed on the OSD 47 without confirming the storage locations of the recording media of any desired type to be ejected. Accordingly, the ejection operation of only the recording media of any specific type to be ejected is executed consecutively, so that the effort by the user can be saved and the ejection time of a plurality of recording media can be shortened.

The recording medium apparatus and the recording medium ejection method of the invention are not limited to the embodiments described above and appropriate modifications and improvements can be made in the invention without departing from the spirit and scope thereof in such a manner that the embodiments are used in combination (the user is enabled to designate both the type of recording medium and the recording medium storage location).
In the description of the embodiment, the system controller 30 controls the changer mechanism controller 31 for consecutively executing the ejection operation of a plurality of recording media, but only either the system controller 30 or the changer mechanism controller 31 may execute the ejection operation.
For example, in the embodiment described above, the detection section detects the user drawing out the recording medium 100 transported to the position where a part of the recording medium is projected to the outside of the apparatus from the ejection slot 12 and then the ejection operation of the next recording medium 100 to be ejected is started. However, the invention is not limited to it; while the recording medium 100 to be ejected is transported to the position where a part of the recording medium is projected to the outside of the apparatus from the ejection slot 12, the next recording medium 100 to be ejected may be positioned at the same position as the ejection slot 12. In doing so, the ejection time can be shortened still more.

Designating the type of recording medium 100 is not limited to designating media of DVD-V, etc. For example, a recording medium recording video, a recording medium recording audio can also be designated. In this case, for example, if the type of recording medium is DVD-V, information that the recording medium is a recording medium recording video may be registered in the recording medium information table and if the type of recording medium is CDDA, information that the recording medium is a recording medium recording audio may be registered in the recording medium information table. In doing so, for example, if the user ejects in batch a plurality of recording media recording video that cannot be used during driving a vehicle in the recording medium apparatus installed in the vehicle, it is made possible to replace them with CDDA recording audio more rapidly, and the convenience is improved.

As described above, the recording medium apparatus 10 according to the embodiment of the invention has the storage section 20, which is provided in the apparatus, for storing a plurality of recording media 100; the ejection slot 12 for ejecting the recording media 100 stored in the storage section 20 to outside of the apparatus; the designation section (the user operation section 46 and OSD 47) to designate recording media 100 which is to be ejected through the ejection slot 12 out of the plurality of recording media 100 stored in the storage section 20; and the control section (the system controller 30) for consecutively executing ejection of the recording media 100 designated through the designation section in sequence. Therefore, it is made possible to save the effort of the user and shorten the ejection time of a plurality of recording media.

## Claims

1. A recording medium apparatus comprising:
a storage section, which is provided in said recording medium apparatus, for storing a plurality of recording media;
an ejection slot for ejecting the recording media stored in said storage section to outside of said recording medium apparatus;
a designation section to designate recording media which is to be ejected through said ejection slot out of the plurality of recording media stored in said storage section; and
a control section for consecutively executing ejection of said recording media designated through said designation section in sequence.

2. The recording medium apparatus according to claim 1, wherein said designation section is configured to designate recording media to be ejected for each type of recording media.

3. A recording medium ejection method of ejecting designated recording media from a storage section which stores a plurality of recording media, comprising the steps of:
designating recording media to be ejected out of the plurality of recording media stored in said storage section; and
consecutively executing ejection of said designated recording media in sequence.
